# EUROPEAN PATENT APPLICATION

(11) **EP 4 550 196 A1**
(43) Date of publication of application: **07.05.2025**
(21) Application number: 23207699.2
(22) Date of filing: 03.11.2023
(51) Int. Cl.: G06F 30/13, G07C 9/20, G06F 111/04, G06F 111/20

(54) **METHOD OF CREATING AN ACCESS GATE AND AN ACCESS CONTROL SYSTEM OF A BUILDING**

(71) Applicant: dormakaba Schweiz AG, 8623 Wetzikon (CH); dormakaba Deutschland GmbH, 58256 Ennepetal (DE)
(72) Inventor: RAPPEL, Christian, 8006 Zürich (CH); MICHEL, François, 3963 Crans-Montana (CH); LEINENWEBER, Mike, 58256 Ennepetal (DE); LAUFER, Kai, 58256 Ennepetal (DE)
(74) Representative: Balder IP Law, S.L.

(57) **Abstract**

According to a first aspect of the present invention, a computer-implemented method is provided. The method may comprise providing a plurality of potential gate functionalities. Each of the plurality of potential gate functionalities may be associated with at least one gate component and with a respective configuration of the respective gate component. The method may comprise receiving, for an access gate, a gate functionality selection comprising at least one gate functionality of the plurality of potential gate functionalities. The method may comprise processing the gate functionality selection and thereby generating a virtual representation of the access gate. The access gate may include a component set comprising at least one gate component and a configuration set comprising at least one configuration. Each configuration of the configuration set may correspond to a respective gate component of the component set. The component set and the configuration set may correspond to the gate functionality selection. The virtual representation of the access gate may be configured to facilitate building the access gate.

## Description

### FIELD OF THE INVENTION

The present invention relates to a computer-implemented method of creating an access gate of a building, in particular to a computer-implemented method that is easy to use. Further, the present invention relates to a computer-implemented method of creating an access control system of a building, in particular to a computer-implemented method that is easy to use. Further, the present invention relates to a corresponding computer program.

### BACKGROUND OF THE INVENTION

Entry systems have become widely used in applications in particular for access control in building facilities. Access control relates to granting, denying or limiting access to particular section(s) of a controlled area, usually by means of some level of access control by use of a barrier, such as a door, turnstile, parking gate, elevator door, or other barrier.

An access gate of a building often fulfills different functionalities at the same time, inter alia e.g. access control, fire protection, ensuring escape routes, and people flow management. Such functionalities may be realized by equipping such an access gate with several different components, which have respective configurations.

When creating an access gate having different functionalities, a lot of specialized knowledge is required, as components that can implement different functionalities can have conflicting requirements and might therefore contradict each other. Also the respective configurations may contradict each other, and the functionalities as such may contradict each other.

None of the known concepts provide an easy-to-use solution. Therefore, there is a need for such solution.

### SUMMARY OF THE INVENTION

It is an object of the present invention to provide a method of creating an access gate of a building and a method of creating an access control stem of a building which at least partially overcome the above-mentioned disadvantages. In particular, it is an object of the present invention to provide methods which are easy to use.

According to a first aspect of the present invention, a computer-implemented method is provided. The method may comprise providing a plurality of potential gate functionalities. Each of the plurality of potential gate functionalities may be associated with at least one gate component and with a respective configuration of the respective gate component. The method may comprise receiving, for an access gate, a gate functionality selection comprising at least one gate functionality of the plurality of potential gate functionalities. The method may comprise processing the gate functionality selection and thereby generating a virtual representation of the access gate. The access gate may include a component set comprising at least one gate component and a configuration set comprising at least one configuration. Each configuration of the configuration set may correspond to a respective gate component of the component set. The component set and the configuration set may correspond to the gate functionality selection. The virtual representation of the access gate may be configured to facilitate building the access gate.

The method of the present disclosure allows to obtain the component set and the configuration set, which fulfil the gate functionality selection, in an automated, reliable, reproducible and fast way. The method does not require a lot of dedicated background knowledge of a user inputting the gate functionality selection, e.g. no or less expert know-how may be required as compared to traditionally used methods. The method allows to consider all relevant aspects of the component set, e.g. inter-component compatibilities. The method allows to check the consistency of components of a component set with each other. The method allows to provide configurations of gate components in a reliable and fast way. The method allows virtual testing/simulations of the access gate, its components and its functionalities, and improvements thereof, e.g. based on simulations. The method allows to reduce errors and provides a higher quality of component sets/configuration sets as compared to traditionally used methods. The method allows to create digital twins.

The method is computer-implemented. In particular, the step of processing the gate functionality selection and thereby generating the virtual representation is performed by a computer/is a computer-implemented step.

The present method allows to combine components automatically with other components, based on the respective functionalities, to build more advanced functions. The method also allows to perform function-oriented tests of the components and/or of the access gate, and thus to standardize interfaces and acceptance tests.

The computer-implemented method may be a method of creating and/or designing an access gate of a building. The computer-implemented method may be a method of creating and/or designing an access control system of a building, wherein the access control system comprises the access gate. The access gate may be a physical access gate. The access gate may be an access point. The access gate may comprise a door.

The plurality of potential gate functionalities may comprise gate functionalities that may be generally available for an access gate and/or gate functionalities that are possible for the access gate, i.e. whose implementation is technically feasible for the specific access gate. Providing the plurality of potential gate functionalities may comprise checking whether potential gate functionalities are technically feasible for a specific access gate, e.g. based on environmental/predefined conditions of the access gate.

The plurality of potential gate functionalities may be filtered and/or defined based on physical conditions/environmental conditions/predefined conditions in the building.

The plurality of potential gate functionalities may be tested/filtered, e.g. by simulations and/or by digital tests. The plurality of potential gate functionalities may be tested/filtered, e.g. based on data of physical access gates that are installed/realized and that have respective gate functionalities. The plurality of potential gate functionalities may be pre-tested/pre-filtered.

Filtering/testing the plurality of potential gate functionalities may minimize the testing effort when realizing/building/commissioning a respective access gate, as this allows avoiding inconsistencies between a functionality of an access gate and functionalities of other access gates and/or environmental/predefined conditions.

The potential gate functionalities may comprise basic door operations such as opening or closing functionalities. The potential gate functionalities may comprise the ability to set components into specific operation modes (e.g., that as a default, a door having a fire protection functionality must be closed). The potential gate functionalities may comprise the ability to provide/indicate status information about an access gate and/or a component thereof (e.g., that a door is open). E.g., a gate component (or each gate component) may be configured to provide a status information, e.g. indicating an failure-free operation/indicating a failure once a failure occurs.

The potential gate functionalities may comprise a credential-based access control. I.e., the access gate may have a functionality of granting access only based on verifying a validity of a credential of a user.

The potential gate functionalities may comprise a fire protection functionality that may prevent automatic opening of access gates/doors in the event of fire, in order to avoid a spread of fire. The fire protection functionality may be activated e.g. upon detecting fire or smoke, e.g. by a fire/smoke detector. The fire protection functionality may include that an access gate/a door can then only be opened manually. The fire protection functionality may include that an access gate motor/a door motor may not exert resistance against manually opening the access gate/door. The access gate may comprise a control unit that receives a signal of the fire/smoke detector and that activates the fire protection functionality based on receiving such a signal.

The above-described fire protection functionality illustrates that a gate functionality may involve several access gate components, e.g. a door motor, a door closer, a fire/smoke detector and a control unit of the access gate, and corresponding configurations thereof.

The potential gate functionalities may comprise a power reserve functionality. An energy storage device, e.g. a battery, may correspond to the power reserve functionality. The energy storage device may store a power reserve that can provide power during a power cut.

Another gate functionality may relate to time profiles of the access gate. E.g., an access gate may be in an unlocked mode during day times and during business days, and may be in a locked mode during weekends and/or during night times. In an unlocked mode, it may still be possible to lock the access gate, and in a locked mode, it may still be possible to unlock the access gate, e.g. upon individual requests.

Another gate functionality may relate to a frame contact sensor that determines whether a door leaf is in contact with a door frame (i.e., the door is closed) or not (i.e., the door is open).

The potential gate functionalities may comprise conditional gate functionalities. Conditional gate functionalities may be functionalities that can be activated/triggered, e.g. based on environmental/predefined conditions (e.g., sensor signals) and/or based on signals from a control unit, e.g. a control unit of the access gate and/or of an access system comprising the access gate. The above described fire protection functionality is an example of such a conditional gate functionality.

The gate functionality selection may comprise functionalities of the access gate. The gate functionality selection may comprise functionalities that are intended/desired for the access gate. The gate functionality selection may comprise functionalities that the access gate is designed to have.

The configuration of a gate component may be a parametrization. The configuration set may be a parametrization set.

Each component may correspond to/implement a single gate functionality. It is also possible that several components jointly correspond to/implement a gate functionality. It is also possible that one component corresponds to/implements a plurality of gate functionalities.

Each configuration may correspond to/implement a single gate functionality. It is also possible that several configurations jointly correspond to/implement a gate functionality. It is also possible that one configuration corresponds to/implements a plurality of gate functionalities.

Receiving the gate functionality selection may comprise receiving a user input. The user input may comprise/indicate the gate functionality selection. Receiving the gate functionality selection may be based on desired functionalities of the access gate. E.g., a user may select functionalities on a graphical user interface of a computer, e.g. by clicking on functionalities and/or by dragging and dropping such functionalities within a graphical user interface. The plurality of potential gate functionalities may be selected from a gate functionality database.

Processing the gate functionality selection and/or generating the virtual representation may be based on predefined rules. Processing the gate functionality selection and/or generating the virtual representation may be based on data of existing access gates. Processing the gate functionality selection and/or generating the virtual representation may be based on machine learning. Processing the gate functionality selection and/or generating the virtual representation may comprise selecting the at least one component of the component set from a component database. Processing the gate functionality selection and/or generating the virtual representation may comprise selecting the respective configuration of the configuration set from a configuration database.

The component database may be tested/filtered, e.g. by simulations and/or digital tests. The component database may be tested/filtered, e.g. based on data of physical access gates that are installed/realized and that have respective gate functionalities/respective components.

The component set and the configuration set may fulfill/may correspond to the gate functionality selection. The component set and the configuration set may implement/realize the gate functionality selection.

The component set and the configuration set may comprise advise on how to install the components/on how to build the access gate. The component set and the configuration set may comprise non-loT components, e.g. purely mechanical components or wiring, and may comprise configurations of such components. The configuration set may comprise adjustment information for the components of the component set. The terms "configuration" and "adjustment information" may be used interchangeably.

Building the access gate may include providing and/or configuring each component of the component set.

In other words: Building the physical access gate may include providing and/or configuring each component of the component set.

The method may further comprise, e.g. based on the virtual representation, providing and/or configuring each component of the component set, and, thereby, facilitating building the access gate.

The method may further comprise building, e.g. based on the virtual representation, the access gate.

The component set may include at least one of a lock (e.g., an electronic lock), a door closer, cabling (e.g., power cabling and/or signal cabling), a transceiver/transmitter/receiver configured to send and/or receive signals, energy harvesting means (e.g., an indoor solar cell), an energy storage device (e.g. a battery), a control unit, a credential reading unit, a motion detector, and a fire protection component.

The control unit may be configured to control the access gate, e.g. to control functionalities thereof and/or to control operation of the access gate and its functionalities. The transceiver/transmitter/receiver may be configured to communicate wirelessly. The credential reading unit may be configured to receive a signal of a credential, e.g. a keycard signal. This may allow to grant access based on the validity of a credential of a user. The credential reading unit may comprise a keycard reader. The energy storage device may be configured to power the access gate during a power cut.

The component set and/or configuration set may comprise a wiring diagram. The component set and/or configuration set may comprise an IT integration, which may specify how a respective component interacts with the access gate and/or the access control system and/or a control unit of the access gate.

The component set may comprise at least two components. Processing the gate functionality selection and thereby generating the virtual representation may comprise checking a consistency between each gate component of the component set with the other one or more gate components of the component set. Processing the gate functionality selection and thereby generating the virtual representation may further comprise, e.g. upon determining that one gate component is inconsistent with the other one or more gate components of the component set, exchanging the inconsistent gate component with a replacement gate component. The replacement gate component may correspond to the same gate functionality as the inconsistent gate component. Processing the gate functionality selection and thereby generating the virtual representation may comprise confirming/verifying that the replacement gate component is consistent with the other one or more gate components of the component set.

The replacement gate component may have the same gate functionality as the inconsistent gate component.

Checking a consistency between each gate component of the component set with the other one or more gate components of the component set may comprise checking a consistency between a configuration of the component with the configuration of the other one or more gate components.

The consistency may be checked e.g. based on at least one of the following: configuration data, data of existing access gates, machine learning, predefined rules.

Before its consistency is verified, the component set may be considered as an interim component set. Processing the gate functionality selection and thereby generating the virtual representation may comprise providing an interim component set and a corresponding interim configuration. The interim component set and the interim configuration set may correspond to the gate functionality selection.

The method may further comprise simulating the access gate, e.g. based on the virtual representation and e.g. based on environmental/predefined conditions.

Simulating the access gate may comprise simulating an operation of the access gate. Simulating the access gate may comprise iteratively defining/adjusting the configuration set of the access gate, e.g. iteratively defining/adjusting configuration parameters of individual components of the component set, e.g. based on the simulation/based on simulation loops.

Environmental/predefined conditions e.g. may comprise specific people flow conditions, noise conditions and ambient light/brightness conditions. E.g., a brightness condition may be relevant for motion detectors and the configuration thereof. Configurations may be adjusted based on environmental/predefined conditions. E.g., the configuration of a component may comprise that it is adjustable and/or adjusted based on environmental/predefined conditions.

The method may further comprise determining, e.g. based on the simulating, a low-performance gate component of the component selection. The method may further comprise, exchanging the low-performance gate component of the component selection by a replacement gate component having a higher performance.

The method may further comprise generating, e.g. based on the gate functionality selection, a plurality of gate component sets and corresponding configuration sets for the access gate, each gate component set and corresponding configuration set corresponding to the gate functionality selection. The method may further comprise simulating, e.g. for each of the gate component sets and the corresponding configuration set, a corresponding access gate, e.g. based on environmental/predefined conditions. The method may further comprise selecting, based on the simulating, one of the gate component sets and the corresponding configuration set.

Selecting, based on the simulating, one of the gate component sets and the corresponding configuration set may comprise selecting the gate component set and the corresponding configuration set having the best performance, e.g. allowing the highest people flow, having the highest security, having the highest reliability etc.

The selected gate component set and the corresponding configuration set may then be used for the virtual representation of the access gate.

In some embodiments, the pluralities of gate component sets e.g. may be identical to each other/may differ from each other only with respect to their corresponding configuration sets. This may allow to find the best configuration set for a given component set.

The virtual representation may be a virtual representation of an access control system. The access control system may comprise a plurality of access gates. The plurality of access gates may comprise the access gate and one or more additional access gates. The method may comprise receiving a plurality of gate functionality selections comprising, for each of the access gates, a corresponding gate functionality selection respectively comprising at least one gate functionality. The method may comprise receiving, for the access control system, a system functionality selection comprising at least one system functionality. The method may comprise processing the system functionality selection and assigning, e.g. based on the system functionality selection, at least one additional gate functionality to at least one of plurality of gate functionality selections. The at least one additional gate functionality may correspond to the system functionality selection. The method may comprise processing the plurality of gate functionality selections and thereby generating a virtual representation of the access control system, wherein each access gate of the access control system includes a respective component set and a respective corresponding configuration set, each gate component set and each configuration set corresponding to the respective gate functionality selection of the plurality of gate functionality selections. The virtual representation of the access control system may be configured to facilitate building the access control system.

The step of processing the system functionality selection and assigning at least one additional gate functionality may be performed by a computer/may be a computer-implemented step.

Processing the system functionality selection and assigning at least one additional gate functionality may be based on predefined rules. Processing the system functionality selection and assigning at least one additional gate functionality may be based on data of existing access gates. Processing the system functionality selection and assigning at least one additional gate functionality may be based on machine learning.

E.g., it may be a system functionality that there as escape routes for each room. These escape routes may be implemented via different access gates - i.e., assigning an escape route functionality to one or more of the access gates may correspond to the overall system functionality of having escape routes for each room.

Disclosure with respect to individual access gates is generally applicable also to access control systems/individual access gates thereof, unless otherwise stated. Disclosure with respect to gate functionalities is generally applicable also to system functionalities/gate functionalities of individual access gates of the access control system, unless otherwise stated.

The method may comprise building, e.g. based on the virtual representation, the access control system.

A consistency between each component of a component set with each other component of said component set may be checked for each component set of each access gate of the access control system.

A plurality of gate components and corresponding configuration sets may be simulated for each access gate of the access gate system, e.g. based on environmental/predefined conditions. For each access gate of the access gate system, one of the gate component sets and the corresponding configuration set may be selected, e.g. based on the simulating.

The gate functionality selection and/or the system functionality selection may comprise at least one of the following: access control (e.g., based on the validity of a credential), fire protection, ensuring escape routes, and people flow management.

Each of the plurality of gate functionality selections may comprise at least one of the following: access control, fire protection, escape routes, and people flow management. Each of the plurality of gate functionality selections may serve at least one of the following purposes: access control, fire protection, escape routes, and people flow management.

The access gate may be an access gate of a building. Receiving the gate functionality selection may comprise receiving a building plan of the building. Receiving the gate functionality selection may comprise determining the gate functionality selection based on the building plan.

The gate functionality selection may be received by determining the gate functionality selection based on the building plan.

The access control system may be an access control system of a building. Receiving the plurality of gate functionality selections and/or receiving the system functionality selection may comprise receiving a building plan of the building. Receiving the plurality of gate functionality selections and/or receiving the system functionality selection may comprise determining the plurality of gate functionality selections and the system functionality selection based on the building plan.

The plurality of gate functionality selections and/or the system functionality selection may be received by determining the plurality of gate functionality selections and/or the system functionality selection based on the building plan.

The method may further comprise checking a consistency between the gate functionality selection of each access gate and the gate functionality selections of the other access gates of the plurality of access gates. The method may further comprise, e.g. upon determining that one of the gate functionality selections is inconsistent, determining an inconsistent gate functionality of the inconsistent gate functionality selection and removing the inconsistent gate functionality from the inconsistent gate functionality selection. The method may further comprise re-assigning the removed gate functionality to a second gate functionality selection corresponding to a second access gate, and confirming/verifying that the second gate functionality selection is consistent with the gate functionality selections of the other access gates of the plurality of access gates.

The second access gate may be an access gate different from the access gate having the initially inconsistent functionality selection corresponding thereto.

The consistency may be checked e.g. based on at least one of the following: data of existing access control systems, machine learning, predefined rules.

The method may further comprise simulating the access control system, e.g. based on the virtual representation and e.g. based on environmental/predefined conditions.

Simulating the access control system may comprise simulating an operation of the access control system. Simulating the access control system may comprise iteratively defining/adjusting the plurality of configuration sets of the access control system, e.g. iteratively defining/adjusting configuration parameters of individual components of the plurality of component sets, e.g. based on the simulation/based on simulation loops.

The method may further comprise generating, e.g. based on the plurality of gate functionality selections and e.g. based on the system functionality selection, a plurality of system sets. Each system set may comprise, e.g. for each of the access gates, a gate component set and a corresponding configuration set. Each system set may correspond to the plurality of gate functionality selections and to the system functionality selection. The method may comprise simulating, e.g. for each of the system sets, a corresponding access control system based on environmental/predefined conditions. The method may further comprise selecting, e.g. based on the simulating, one of the system sets.

Selecting, based on the simulating, one of the system sets may comprise selecting the system set having the best performance, e.g. allowing the highest people flow, having the highest security, having the highest reliability etc.

In some embodiments, the pluralities of system sets e.g. may only differ with respect to their respective pluralities of configuration sets while the pluralities of component sets may be identical. This may allow to find the best plurality of configuration sets for a given plurality of component sets.

The method may further comprise determining a backup assignment of gate functionalities. Determining the backup assignment may comprise assuming a failure of a gate functionality of an access gate of the plurality of access gates. Determining the backup assignment may comprise generating the backup assignment by re-assigning the failed gate functionality to one or more gate functionality selections corresponding to one or more of the other access gates.

A failure of a gate functionality of an access gate e.g. may relate to a failure of a component of the access gate and/or may relate to a failure of a configuration of a respective component. Such failures e.g. may be indicated by the respective component and/or by a control unit of the access gate.

Determining the backup assignment may also relate to an individual access gate. Determining the backup assignment may comprise assuming a failure of a gate component of an access gate and re-assigning the gate functionality of the failed component to another component of the access gate, e.g. by adjusting the configuration of the another component.

One or more gate components of the access gate may be configured to indicate a failure thereof (e.g., by providing a status signal comprising status information that indicate failure free operation, and an absence thereof may be interpreted as a failure). The access gate(s) may comprise a control unit configured to detect a failure of a gate functionality and/or of a component of the access gate.

Determining backup assignments may provide redundancy and increase reliability of the access gate/the access control system. The method may further comprise storing the backup assignments within the access control system and/or within the access gate(s). The access control system and/or the access gate(s) may be configured to activate the backup assignment, e.g. based on detecting a corresponding failure. The method may further comprise activating, e.g. by the access control system and/or by the access gate(s), the backup assignment, e.g. based on detecting a failure of a gate functionality.

Processing the gate functionality selection or the plurality of gate functionality selections and thereby generating the virtual representation of the access gate and/or the access control system may be performed using an artificial intelligence algorithm. The artificial intelligence algorithm may be pre-trained based on training data that comprise data of access gates and corresponding gate components. The training data optionally may comprise data of access control systems comprising a plurality of access gates.

The artificial intelligence algorithm may be pre-trained based on training data that comprise data of physical access gates and corresponding physical gate components. The artificial intelligence algorithm may be pre-trained based on training data that comprise data of physical access control systems and corresponding physical gate components. The artificial intelligence algorithm may be pre-trained based on training data that comprise data of physical buildings.

According to a second aspect of the present invention, a computer program is provided. The computer program comprises computer-readable instructions which when executed by a data processing system cause the data processing system to perform the computer-implemented method according to the first aspect of the present invention.

All technical implementation details and advantages described with respect to the first aspect of the present invention are self-evidently mutatis mutandis applicable for the second aspect of the present invention and vice versa.

### BRIEF DESCRIPTION OF THE DRAWINGS

The present invention will be explained in more detail, by way of example, with reference to the drawings in which:
- Figure 1: is a schematic perspective view of a building comprising an access control system comprising a plurality of access gates that have been built according to embodiments of the present invention.
- Figure 2a: is a high-level flow chart diagram illustrating a sequence of a method according to embodiments of the present invention.
- Figure 2b: is a high-level flow chart diagram illustrating a sequence of a method according to embodiments of the present invention.
- Figure 3: is a schematic exemplary diagram of a graphical user interface of a computer implementing the method according to embodiments of the present invention.

### FIGURATIVE DESCRIPTION OF EMBODIMENTS

In the following figurative description, the reference signs cla, clb, c1c, cld, cle, elf, c1g, clh, cli, c1j are abbreviated as c1a-j, the reference signs c1a-j, c2a-j, c3a-j, c4a-j, c5a-j, c6a-j, c7a-j, c8a-j, c9a-j, c10a-j, c11a-j are abbreviated as c1a-j, ..., c11a-j, the reference signs f1, f2, f3, f4, f5, f6 are abbreviated as f1, ..., f6, and the reference signs g1, g2, g3, g4 are abbreviated as g1, ..., g4.

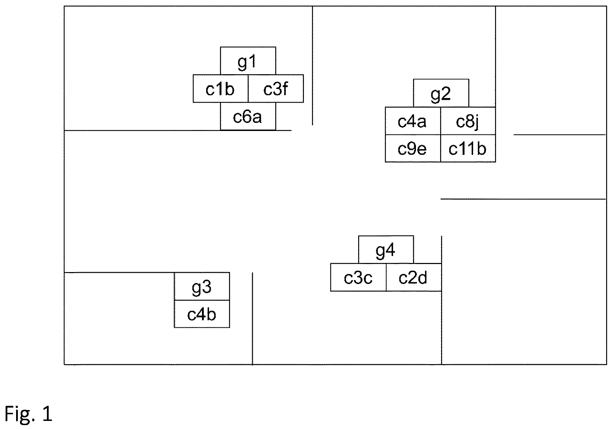

Figure 1 is a schematic perspective view of a building comprising an access control system comprising a plurality of access gates that have been built according to embodiments of the present invention.

The building comprises an access control system comprising a plurality of access gates g1, ..., g4. The access gates g1, ..., g4 respectively comprise a component set comprising gate components c1a-j, ..., c11a-j and a configuration set of corresponding configurations (not shown). The component set and the configuration set correspond to the gate functionality selection of the respective access gate. For example, the access gate g1 includes in this example the components clb, c3f and c6a, corresponding to the gate functionalities f1, f3 and f6. For the gate functionality f1, the second variant of the component c1 that corresponds to f1 is used (indicated by the letter "b" at the end of c1b). For the gate functionality f3, the sixth variant of the component c3 that corresponds to f3 is used (cf. c3f). For the gate functionality f6, the first variant is used (cf. c6a). The access gate g2 comprises four components that correspond to/implement four gate functionalities. The access gate g3 comprises a single component c4b. The access gate g4 comprises two components, c3c and c2d. The plurality of gate functionality selections may be based on/may incorporate a system functionality selection of the access control system.

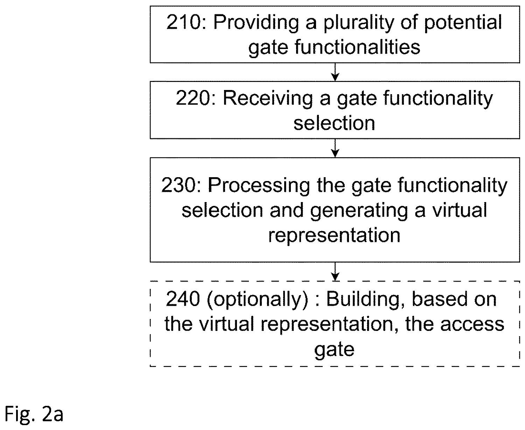

Figure 2a is a high-level flow chart diagram illustrating a sequence of a method according to embodiments of the present invention.

In step 210, a plurality of potential gate functionalities is provided. In step 220, a gate functionality selection is received. In step 230, the gate functionality selection is processed and a virtual representation of the access gate is generated thereby. The access gate includes a component set and a configuration set that correspond to the gate functionality selection. The virtual representation of the access gate is configured to facilitate building the access gate. In optional step 240, the access gate is built based on the virtual representation.

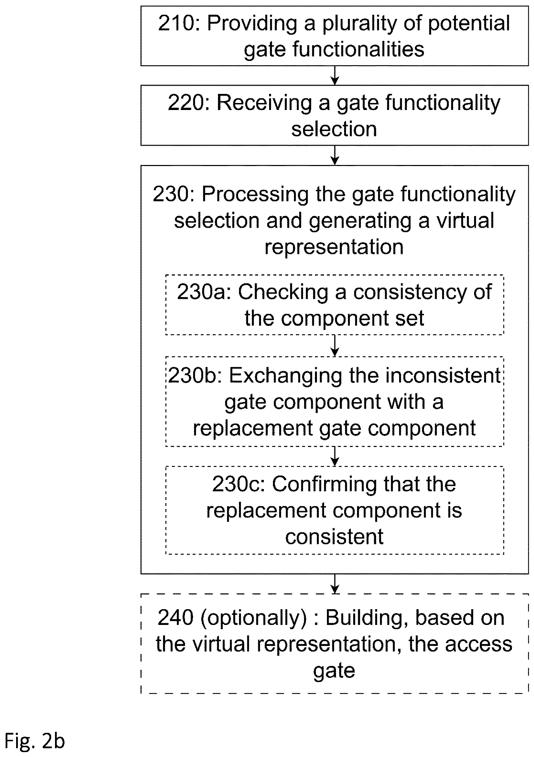

Figure 2b is a high-level flow chart diagram illustrating a sequence of a method according to embodiments of the present invention.

Step 230 may comprise the steps 230a, 230b and 230c. In step 230a, a consistency of the component set is checked. This may comprise checking a consistency between each gate component of the component set with other one or more gate components of the component set. In step 230b, upon determining that one gate component is inconsistent with the other one or more gate components of the component set, the inconsistent gate component is exchanged with a replacement gate component. The replacement gate component may correspond to the same functionality as the inconsistent gate component. In step 230c, it is confirmed that the replacement component is consistent with the other one or more gate components of the component set.

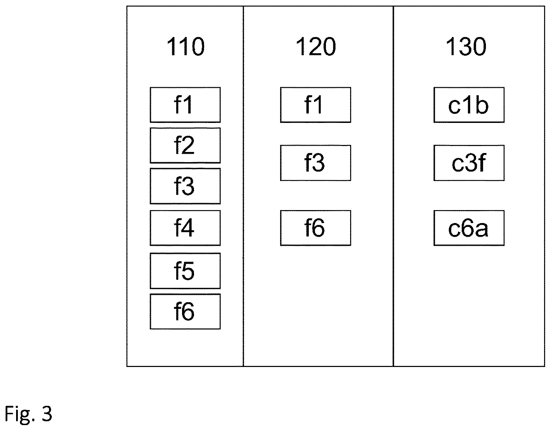

Figure 3 is a schematic exemplary diagram of a graphical user interface of a computer implementing the method according to embodiments of the present invention. A plurality 110 of potential gate functionalities f1, ..., f6 is provided in the left rectangle. A functionality selection 120 for an access gate may be received. In this example, the functionality selection 120 includes gate functionalities f1, f3 and f6. Gate functionalities may be represented by functional blocks. The functionality selection 120 is displayed in the central rectangle. The gate functionality selection 120 is processed and a virtual representation of the access gate is generated thereby. The access gate includes a component set 130, which in this example includes components c1b, c3f and c6a. The component set 130 is shown in the right rectangle. The access gate also includes a configuration set (not shown). The components c1b, c3f and c6a correspond to the gate functionalities f1, f3 and f6. The component c1b corresponds to the second component variant corresponding to/implementing gate functionality f1. The component c3f corresponds to the sixth component variant corresponding to f3, and the component c6a corresponds to the first component variant corresponding to f6.

Although some aspects have been described in the context of a method, it is clear that these aspects also represent a description of the corresponding apparatus, where a method step or a feature of a method step corresponds to a block or device. Analogously, aspects described in the context of a block or item or feature of a corresponding apparatus also represent a description of a corresponding method step.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 110: plurality of potential gate functionalities
- 120: gate functionality selection
- 130: component set
- 210: providing a plurality of potential gate functionalities
- 220: receiving a gate functionality selection
- 230: processing the gate functionality selection and generating a virtual representation
- 240: building, based on the virtual representation, the access gate
- c1a-j, ..., c11a-j: access gate component
- f1, ... f6: gate functionality
- g1, ... g4: access gate

## Claims

1. A computer-implemented method, comprising:
providing (210) a plurality (110) of potential gate functionalities, wherein each of the plurality (110) of potential gate functionalities is associated with at least one gate component and with a respective configuration of the respective gate component;
receiving (220), for an access gate, a gate functionality selection (120) comprising at least one gate functionality of the plurality (110) of potential gate functionalities;
processing (230) the gate functionality selection (120) and thereby generating a virtual representation of the access gate, the access gate including a component set (130) comprising at least one gate component and a configuration set comprising at least one configuration, each configuration of the configuration set corresponding to a respective gate component of the component set (130), the component set (130) and the configuration set corresponding to the gate functionality selection, the virtual representation of the access gate being configured to facilitate building the access gate.

2. The computer-implemented method according to claim 1,
wherein building the access gate includes providing and/or configuring each component of the component set.

3. The computer-implemented method according to any one of the preceding claims, wherein the method further comprises:
based on the virtual representation, providing and/or configuring each component of the component set and, thereby, facilitating building the access gate.

4. The computer-implemented method according to any one of the preceding claims, wherein the method further comprises:
building (240), based on the virtual representation, the access gate.

5. The computer-implemented method according to any one of the preceding claims, wherein the component set (130) includes at least one of:
• a lock,
• a door closer,
• cabling,
• a transceiver configured to send and receive signals,
• energy harvesting means,
• an energy storage device,
• a control unit,
• a credential reading unit,
• a motion detector, and
• a fire protection component.

6. The computer-implemented method according to any one of the preceding claims, wherein the component set (130) comprises at least two gate components,
wherein processing (230) the gate functionality selection (120) and thereby generating the virtual representation comprises:
checking (230a) a consistency between each gate component of the component set with the other one or more gate components of the component set,
upon determining that one gate component is inconsistent with the other one or more gate components of the component set, exchanging (230b) the inconsistent gate component with a replacement gate component, the replacement gate component corresponding to the same gate functionality as the inconsistent gate component, and
confirming (230c) that the replacement gate component is consistent with the other one or more gate components of the component set.

7. The computer-implemented method according to any one of the preceding claims, wherein the method further comprises:
simulating the access gate based on the virtual representation and based on environmental conditions.

8. The computer-implemented method according to any one of the preceding claims, wherein the method further comprises:
generating, based on the gate functionality selection, a plurality of gate component sets and corresponding configuration sets for the access gate, each gate component set and corresponding configuration set corresponding to the gate functionality selection,
simulating, for each of the gate component sets and the corresponding configuration set, a corresponding access gate based on environmental conditions, and
selecting, based on the simulating, one of the gate component sets and the corresponding configuration set.

9. The computer-implemented method according to any one of the preceding claims, wherein the virtual representation is a virtual representation of an access control system, the access control system comprising a plurality of access gates, the plurality of access gates comprising the access gate and one or more additional access gates,
wherein the method comprises:
receiving a plurality of gate functionality selections comprising, for each of the access gates, a corresponding gate functionality selection respectively comprising at least one gate functionality,
receiving, for the access control system, a system functionality selection comprising at least one system functionality,
processing the system functionality selection and assigning, based on the system functionality selection, at least one additional gate functionality to at least one of the plurality of gate functionality selections, the at least one additional gate functionality corresponding to the system functionality selection, and
processing the plurality of gate functionality selections and thereby generating a virtual representation of the access control system, wherein each access gate of the access control system includes a respective component set and a respective corresponding configuration set, each gate component set and each configuration set corresponding to the respective gate functionality selection of the plurality of gate functionality selections, the virtual representation of the access control system being configured to facilitate building the access control system.

10. The computer-implemented method according to any one of the preceding claims, wherein the gate functionality selection (120) and/or the system functionality selection comprise at least one of the following:
• access control,
• fire protection,
• ensuring escape routes, and
• people flow management.

11. The computer-implemented method according to any one of the preceding claims, wherein the access gate is an access gate of a building, wherein receiving (220) the gate functionality selection (120) comprises
receiving a building plan of the building, and
determining the gate functionality selection based on the building plan.

12. The computer-implemented method according to any one of claims 9 to 11, wherein the method further comprises:
checking a consistency between the gate functionality selection of each access gates and the gate functionality selections of the other access gates of the plurality of access gates,
upon determining that one of the gate functionality selections is inconsistent,
determining an inconsistent gate functionality of the inconsistent gate functionality selection and removing the inconsistent gate functionality from the inconsistent gate functionality selection,
re-assigning the removed gate functionality to a second gate functionality selection corresponding to a second access gate, and confirming that the second gate functionality selection is consistent with the gate functionality selections of the other access gates of the plurality of access gates.

13. The computer-implemented method according to any one of claims 9 to 12, wherein the method further comprises:
generating, based on the plurality of gate functionality selections and based on the system functionality selection, a plurality of system sets, each system set comprising, for each of the access gates, a gate component set and a corresponding configuration set, each system set corresponding to the plurality of gate functionality selections and to the system functionality selection,
simulating, for each of the system sets, a corresponding access control system based on environmental conditions, and
selecting, based on the simulating, one of the system sets.

14. The computer-implemented method according to any one of claims 9 to 13, wherein the method further comprises:
determining a backup assignment of gate functionalities, comprising:
assuming a failure of a gate functionality of an access gate of the plurality of access gates, and
generating the backup assignment by re-assigning the failed gate functionality to one or more gate functionality selections corresponding to one or more of the other access gates.

15. The computer-implemented method according to any one of the preceding claims, wherein processing (230) the gate functionality selection (120) or the plurality of gate functionality selections and thereby generating the virtual representation of the access gate and/or the access control system is performed using an artificial intelligence algorithm, the artificial intelligence algorithm being pre-trained based on training data that comprise data of access gates and corresponding gate components, wherein the training data optionally comprise data of access control systems comprising a plurality of access gates.

16. A computer program comprising computer-readable instructions which when executed by a data processing system cause the data processing system to perform the computer-implemented method according to any of claims 1 to 15.
